Europäisches Patentamt

European Patent Office

Office européen des brevets

(11) Publication number: **0 175 559**
A2

(12) **EUROPEAN PATENT APPLICATION**

(21) Application number: 85306543.1

(51) Int. Cl.⁴: **B 60 J 5/14**, E 06 B 9/10

(22) Date of filing: 16.09.85

(30) Priority: 21.09.84 GB 8424017

(43) Date of publication of application: 26.03.86
Bulletin 86/13

(84) Designated Contracting States: **AT BE CH DE FR IT LI
LU NL SE**

(71) Applicant: DOVER ROLLER SHUTTERS LIMITED, Nyloy
Works Hartford Street, Denton Manchester M34 3FR
(GB)

(72) Inventor: Dover, Frederick George, Wharmton
House 139 Manchester Road Greenfield, Oldham
Lancashire OL3 7HJ (GB)

(74) Representative: Funge, Harry et al, M'CAW &
CO. 41-51 Royal Exchange Cross Street, Manchester
M2 7BD (GB)

(54) Locker closure.

(57) A locker closure (40) comprises a roller shutter (41)
mounted in a rectangular frame (3, 20) formed by spaced
guide channels (3) in which the roller shutter (41) slides and
spaced tie bars (20) connected to the top and bottom of the
guide channels (3). An additional tie bar (20) is connected to
brackets (12) on which the spring plates (4) of the roller (35)
are mounted, and to each of which a removable channel part
(9) is attached so that the roller (35) roller shutter (41) and
channel part (9) can be readily removed from the frame (3, 20).

(EP15479M)
(6.9.85)                    - 1 -

## LOCKER CLOSURE

This invention relates to locker closures and in particular to locker closures of the roller shutter type. Such locker closures are of particular use in the context of the lockers for storage of fire fighting equipment as provided at the opposed sides and/or rear of a fire fighting vehicle or appliance.

It is conventional for the builder of a fire fighting vehicle or appliance to manufacture the vehicle body, provided with the lockers therein, and to fit roller shutter locker closures thereto which have been obtained from a specialist roller shutter door manufacturer. The roller shutter door manufacturer supplies all of the requisite supplementary parts so as to enable a roller shutter closure to be fitted to each locker. For each locker therefore the fitting procedure entails the fitting of the spring plates, the position of which must be determined in situ to accommodate the rolled-up shutter, and the individual fitting of the side supports and guide channels, including cam plates therefor, together with any necessary adjustment thereto to allow for correct locking of the shutter when lowered to the locker-closed position. The fitting of the cill plate is a further separate operation. This fitting operation can take at least 1½ hours per locker and since a vehicle may have seven lockers a considerable labour cost is added to the cost of the vehicle purely in respect of the abovedescribed fitting operation. In addition,

(EP15479M)
(6.9.85)
- 2 -

should maintenance of the roller shutter and fittings therefor be required, it is necessary to loosen the guide channels and "spring" them outwardly in order to remove the roller shutter. This also is a time consuming operation and the shutter or the fittings therefore may be readily damaged.

It is an object of the present invention to provide a locker closure of the abovementioned type which may be fitted to a locker opening quickly and easily and which may be readily removed and replaced for maintenance purposes, thereby avoiding or mitigating the disadvantages of the aforementioned arrangements.

The invention provides a locker closure comprising a roller shutter and fittings therefor, said fittings comprising a pair of spaced guide channels in which said roller shutter may slide longitudinally, and a pair of spaced tie bars securing said guide channels to form a rectangular frame structure in which said roller shutter is mounted.

Each guide channel may include a bracket to which a respective spring plate for the roller shutter is secured. A third tie bar may secure said brackets in spaced disposition. Each guide channel may include a removable channel part which is removably attached to the respective bracket.

The invention will now be described with reference to the accompanying drawings in which:-

Fig. 1          is an exploded perspective view of one
                embodiment with the roller shutter in
                a locker-closing position,

                and,

(EP15479M)
(6.9.85)                        - 3 -

Fig. 2          is a side view of part of the embodiment
                of Fig. 1 to an enlarged scale.

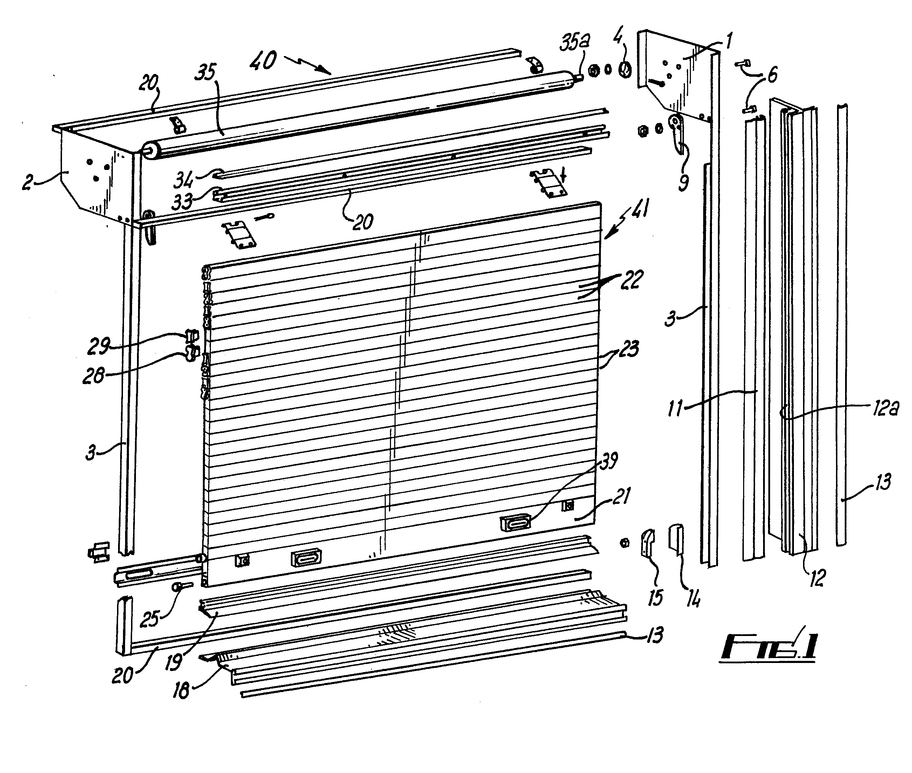

Referring now to Fig. 1 there is shown a locker closure
40 comprising a roller shutter 41 and fittings therefor.
The roller shutter 41 comprises a plurality of laths 22
in edge to edge disposition with lath seals 23 between
each pair of adjacent laths 22.   One end of the assembly
of laths 22 is attached to a roller 35 whilst the other
end has a bottom rail 21 secured thereto.   At each end
of alternate laths 22 are nylon end locks 28 or nylon
spacers 29, and at each end of the bottom rail 21 is a
bottom wheel assembly 25.   The end locks 28, spacers
29 and wheel assemblies 25 run in guide channels 3 so
that the roller shutter 41 can slide longitudinally of
the guide channels 3.

Secured to each guide channel 3 is a cam plate 14 and
nylon cam 15 (only the right hand ones being shown in
Fig. 1) which locate and secure the roller shutter 41
in the down or locker closed position, the locks 39
fitted to the bottom rail 21 being operated manually
when the shutter 41 is to be opened or secured closed.

Also secured to each guide channel 3 is a bracket 1, 2
to which a spring plate 4, for receiving an end spigot
35a of the roller 35, is attached.   In addition each
channel 3 is attached to a side support 12 (only the
right hand one being shown in Fig. 1) which has a channel
formation 12a for receiving a side seal 11.   An infil
strip 13 is also fitted to each side support 12.

The parts described above are conventional and are
supplied to the builder of the fire fighting appliance
by the manufacturer of the roller shutter closure 40,
together with a cill plate 18 and its associated infil

(EP15479M)
(6.9.85) - 4 -

strip 13 and bottom seal 19. The dimensions of such parts are governed by the nominal size of the locker to which they are to be fitted. In the conventional assembly method used heretofore the side supports 12 are fitted to the locker opening and the guide channels 3 and brackets 1, 2 fitted thereto. The spring plates 4 are then fitted and the roller shutter 41 on its roller 35 located therein. Fitting of the cam plates 14, cams 15, cill plate 18, top neoprene or brush seal 34 and seal holder 33, which may be of channel section to provide a gutter, then follows. These fitting steps are time consuming and are prone to errors leading to malfunction of the roller shutter 41, particularly if the locker opening has not been made accurately in accordance with the nominal dimensions or is not truly rectangular.

In the case of the present invention however the guide channels 3 are connected at top and bottom by tie bars 20 to form a rectangular frame of the required dimensions. In addition, to provide additional rigidity, the brackets 1, 2 are connected by a third tie bar 20. The spring plates 4, roller 35 and roller shutter 41, cam plates 14, cams 15 and cill plate 18 are then fitted to the frame as previously described, together with all seals 11,19 and infil strips 13. In consequence the correct operation of the roller shutter 41 and locks 39 can be checked by the manufacturer of the shutter closure 40 before it leaves his factory. The shutter closure 40, in a completely assembled and operational condition may be transported to the vehicle builder with the roller shutter 41 in the locked position. The complete assembly is then presented to the locker opening, the roller shutter 41 raised and the side supports 12 and cill plate 18 secured in the opening in a very quick and

(EP15479M)
(6.9.85)        - 5 -

simple manner, without requiring skilled labour.   In consequence the time and cost of fitting the shutter closure to the locker opening are reduced considerably in comparison with the previously known method.

In addition a further advantage accrues should the shutter closure 40 require maintenance or repair.   With the shutter closure 40 of the present invention the entire assembly may be readily removed from the locker opening for the maintenance or repair work to be carried out, put into an operational condition, and then returned to the locker opening, thereby saving considerable vehicle out of service time and maintenance costs.

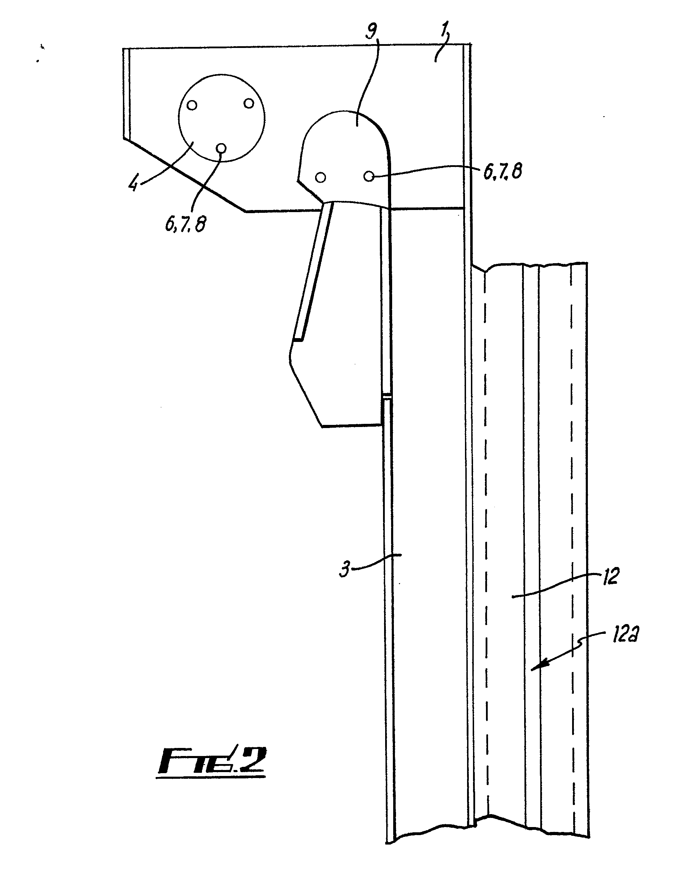

However the shutter closure 40 of the present invention may include a further feature in order to simplify the maintenance of the roller shutter 40.   At the upper end of each guide channel 3 is a guide block channel insert 9, the right hand insert 9 being shown more clearly in Fig. 2.   The nylon insert 9 is secured by bolts 6 to the bracket 1 and is readily removable therefrom.   The channel formation formed by insert 9 and the top of guide channel 3 is slightly narrower than that of guide channel 3, so that the shutter 41 runs on the outside of the block 9 and to prevent damage to the end locks 28, spacers 29, and wheel assemblies 25 by the top edge of channel 3 due to any slight misalignment between the channel formations.   The length of the insert 9 is at least equal to the height of the bottom rail 21 so that when the roller shutter 41 is rolled onto roller 35 with the bottom rail 21 in its uppermost position, removal of the inserts 9 enables the roller shutter 41 and roller 35 to be removed rearwardly and upwardly together from the surrounding frame.   After the necessary maintenance

(EP15479M)
(6.9.85)                    - 6 -

or repair of the roller shutter 41 has been effected,
it may be rolled onto roller 35 and replaced in the
frame, spigots 35a being slid into spring plates 4 and
the bottom rail 21 being disposed at the top of the
guide channels 3.    Inserts 9 are  then replaced and
secured to brackets 1,2 to complete the channel
formation and restore the shutter closure to its fully
operational condition.

A pin (not shown) is inserted into the coiled roller
35 before removal thereof to maintain the spring
tension.  The pin is removed after the roller 35 and
shutter 41, and inserts 9, have been replaced.

(EP15479M)
(6.9.85)                         - 7 -

Claims:

1.  A locker closure comprising a roller shutter and fittings therefor, said fittings comprising a pair of spaced guide channels adapted to receive said roller shutter to slide longitudinally thereof, characterised in that said fittings (3,20) further comprise a pair of spaced tie bars (20) securing said guide channels (3) to form a rectangular frame structure in which said roller shutter (41) is mounted.

2.  A locker closure according to claim 1, characterised in that each guide channel (3) includes a bracket (1,2) to which a respective spring plate (4) for the roller shutter (41) is secured.

3.  A locker closure according to claim 2, characterised in that said fittings (3,20) comprise a third tie bar (20) securing said brackets (1,2) in spaced disposition.

4.  A locker closure according to any one of claims 1 to 3, characterised in that each guide channel (3) includes a removable channel part (9) which is removably attached to the respective brackets (1,2).

5.  A locker closure according to any one of claims 1 to 4 wherein said roller shutter comprises a plurality of laths in edge to edge disposition laterally of said roller shutter with edge seals disposed between each pair of adjacent laths, one end of said roller shutter being attached to a roller and the other end having a

(EP15479M)
(6.9.85) - 8 -

bottom rail secured thereto,
characterised in that
each end of alternate laths (22) has an end lock (28),
and each end of the other laths (22) has a spacer (29),
said end locks (28) and said spacers (29) being adapted
to be received in and slide longitudinally of said guide
channels (3).

6.    A locker closure according to claim 5,
characterised in that
each end of said bottom rail (21) has a wheel assembly
(25) thereon adapted to be received in and roll
longitudinally of said guide channels (3).

7.    A locker closure according to claim 5 or claim 6,
characterised in that
each guide channel (3) comprises a cam plate (14) and
cam (15) operable to locate and secure said roller
shutter (41) in a locker closed position.

8.    A locker closure according to claim 7,
characterised in that
said roller shutter (41) comprises manually operable
locking means (39) attached to said bottom rail (21).

9.    A locker closure according to any one of claims 1
to 8,
characterised in that
each guide channel (3) is attached to a side support
(12) having a channel formation (12a) thereon in which
a side seal (11) is received.

10.    A locker closure according to claim 5, when
dependent on claim 4,
characterised in that,

said removable channel part (9) is of length at
least equal to the height of said bottom rail (21).

0175559

1/2

FIG.1

FIG.2